# EUROPEAN PATENT APPLICATION

(11) **EP 1 793 257 A1**
(43) Date of publication of application: **06.06.2007**
(21) Application number: 06024458.9
(22) Date of filing: 24.11.2006
(51) Int. Cl.: G02B 21/00, G02B 21/16, G02B 21/32, G02B 21/36

(54) **Laser-scanning microscope system and unit for setting operating conditions**

(30) Priority: 30.11.2005 JP 2005345374
(71) Applicant: Olympus Corporation, Tokyo 151-0072 (JP)
(72) Inventor: Takamizawa, Nobuhiro, La Jolla CA 92037 (US)
(74) Representative: von Hellfeld, Axel

(57) **Abstract**

A condition-setting apparatus improves the flexibility of examination. The condition-setting apparatus includes a display unit configured to display a prescan image and a region-specifying section configured to specify at least one region to be irradiated with a laser beam on a prescan screen displaying the prescan image. When a region is specified by the region-specifying section, the display unit displays the specified region and the order of the laser beam irradiation on the prescan image.

## Description

### BACKGROUND OF THE INVENTION

### 1. FIELD OF THE INVENTION

The present invention relates to a laser-scanning microscope system and, more specifically, to a condition-setting apparatus of a laser-scanning microscope for setting laser irradiation conditions of the laser-scanning microscope suitable for examination.

This application is based on Japanese Patent Application No. 2005-345374, the content of which is incorporated herein by reference.

### 2. DESCRIPTION OF RELATED ART

A laser-scanning microscope emits and scans a laser beam in the X and Y directions, detects light transmitted through or reflected from a specimen or fluorescence generated at the specimen with a detector, and obtains two-dimensional brightness information of the transmitted light, the reflected light, or the fluorescence. By displaying the obtained brightness information on a display as a two-dimensional distribution of brightness corresponding to the X-Y scanning positions, the user may observe a fluorescence image, a transmission image, or a reflection image of the specimen.

One type of known laser-scanning microscope is a confocal laser-scanning microscope. A confocal laser-scanning microscope has an aperture stop with a diameter roughly equal to the diffraction limit of the measured light at a position conjugate with respect to the specimen disposed in the optical detection system so as to detect only information corresponding to the surface in focus. Since the confocal laser-scanning microscope can detect information only on the focused plane, an optical cross-sectional image, i.e., three-dimensional information, can be obtained without damaging the specimen. Moreover, by eliminating information corresponding to non-focused planes, a very sharp image can be obtained.

A system that is constituted of a plurality of optical scanning systems included in a confocal laser-scanning microscope has been proposed. This system is capable of optical stimulation of a specimen using one of the optical scanning systems while obtaining a specimen image using another optical scanning system.

For example, U.S. Patent No. 6094300 (hereinafter referred to as "Patent Document 1") discloses a confocal laser-scanning microscope that includes a scanning optical system for scanning, which is capable of carrying out scanning of a specimen and obtaining a specimen image, and a scanning optical system for stimulation, which is capable of applying an optical stimulus to a specimen. The confocal laser-scanning microscope is capable of two-dimensionally applying an optical stimulus by two-dimensionally scanning the specimen with the scanning optical system for stimulation while scanning the specimen with the scanning optical system for scanning, or while the scanning optical system for scanning is not operating. Patent Document 1 also discloses that the scanning optical system for stimulation may apply an optical stimulus at one spot or a plurality of spots.

Since the microscope disclosed in Patent Document 1 applies an optical stimulus to a specimen with the scanning optical system for stimulation while two-dimensionally scanning the specimen with the scanning optical system for scanning, characteristic phenomena that occur in the specimen due to the optical stimulus can be observed.

When examining a living specimen, a part of the specimen (a minute part with a diameter of several micrometers) may be optically stimulated to observe the response to the stimulus on a confocal scanning image or by a minute electrical current measurement. However, Patent Document 1 describing a confocal laser-scanning microscope does not mention the need to manage the order of irradiating stimulation beams on a plurality of spots on a specimen.

### BRIEF SUMMARY OF THE INVENTION

The present invention provides a condition-setting apparatus for a laser-scanning microscope and a laser-scanning microscope system with improved flexibility in examination.

A first aspect of the present invention provides a condition-setting apparatus configured to set laser irradiation conditions suitable for examination and included in a laser-scanning microscope having a scanning optical system for scanning, which is configured to irradiate a scanning laser beam on a specimen so as to obtain an image of the specimen, and a scanning optical system for stimulation, which is configured to irradiate a stimulation laser beam on the specimen so as to stimulate the specimen, the condition-setting apparatus including a display unit configured to display a prescan image; and a region-specifying section configured to specify at least one region to be irradiated with at least one of the scanning laser beam and the stimulation laser beam on a prescan image screen displaying the prescan image, wherein, when at least one region is specified by the region-specifying section, the display unit displays the specified region and the order of laser beam irradiation on the prescan image screen.

Since the condition-setting apparatus includes a region-specifying section configured to specify at least one region to be irradiated with a laser beam, the user can specify any region as the region to be irradiated with a laser beam by using the region-specifying section. In this way, the flexibility in examination is improved, and any desired type of examination can be carried out. Furthermore, since the order of laser beam irradiation at each region is displayed on the prescan screen, the user can easily grasp the order of laser beam irradiation.

The region-specifying section may include a stimulation-region specifying section configured to specify at least one stimulation region to be irradiated with a stimulation laser beam on the prescan screen. The display unit may display the stimulation region and the stimulation order on the prescan image screen when a stimulation region is specified by the stimulation-region specifying section.

Since a stimulation-region specifying section configured to specify at least one stimulation region to be irradiated with a stimulation laser beam is included, the user can specify any desired stimulation region by using the stimulation-region specifying section. In this way, the flexibility in examination is improved, and any desired type of examination can be carried out. Furthermore, since the stimulation order is displayed on the prescan screen, the user can easily grasp the stimulation order.

According to this aspect, for example, a condition-setting screen that includes a prescan-image display section configured to display a prescan image and a stimulation-region specifying section configured to specify at least one stimulation region to be irradiated with a stimulation laser beam is displayed on the display screen of the display unit. When at least one stimulation region is specified by the stimulation-region specifying section, the specified stimulation region and the stimulation order are displayed on the prescan image.

The region-specifying section may include a scanning-region specifying section configured to specify at least one scanning region to be irradiated with a scanning laser beam on the prescan screen. The display unit may display the scanning region and the scanning order on the prescan image screen when a scanning region is specified by the scanning-region specifying section.

Since a scanning-region specifying section configured to specify at least one scanning region to be irradiated with a scanning laser beam is included, the user can specify any desired scanning region by using the scanning-region specifying section. In this way, the flexibility in examination is improved, and any desired type of examination can be carried out. Furthermore, since the scanning order is displayed on the prescan screen, the user can easily grasp the scanning order.

According to this aspect, for example, a condition-setting screen that includes a prescan-image display section configured to display a prescan image and that includes a scanning-region specifying section configured to specify at least one scanning region to be irradiated with a scanning laser beam are displayed on the display screen of the display unit, and, when at least one scanning region is specified by the scanning-region specifying section, the specified scanning region and the scanning order are displayed on the prescan image.

The condition-setting apparatus of the laser-scanning microscope may include an irradiation-order changing unit configured to change the irradiation order of the at least one region to be irradiated with at least one of the scanning laser beam and the stimulation laser beam.

In this way, since the order of laser beam irradiation can be changed later, the flexibility in examination is improved.

More specifically, the condition-setting apparatus of the laser-scanning microscope may include at least one of a scanning-order changing unit configured to change the scanning order of the scanning regions and a stimulation-order changing unit configured to change the stimulation order of the stimulation regions. Since the scanning order and the stimulation order can be changed later, the flexibility in examination is improved.

According to the condition-setting apparatus of the laser-scanning microscope, the shape of the region is one of a spot, a line, and a two-dimensional area.

Since the shape of the regions can be set as one of a spot, a line, and a two-dimensional area, a combination of any of the shapes, i.e., a spot, a line, and a two-dimensional area, may be employed, providing flexibility in laser beam irradiation. In this way, laser beam irradiation suitable for the object under examination can be carried out.

More specifically, the region is one of a scanning region and a stimulation region. Since the shape of the regions can be set as one of a spot, a line, and a two-dimensional area, a combination of any of the shapes, i.e., a spot, a line, and a two-dimensional area, may be employed, providing flexibility in scanning and stimulation. In this way, optical stimulation and scanning suitable for the object under examination can be carried out.

A second aspect of the present invention provides a scanning laser microscope system including a scanning laser microscope and a condition-setting apparatus configured to set laser irradiation conditions suitable for examination with the scanning laser microscope. The scanning laser microscope includes a scanning optical system for imaging, which is configured to irradiate a scanning laser beam on a specimen so as to obtain an image of the specimen, and a scanning optical system for stimulation, which is configured to irradiate a stimulation laser beam on the specimen so as to stimulate the specimen. The condition-setting apparatus includes a display unit configured to display a prescan image; a scanning-region specifying section configured to specify at least one scanning region to be irradiated with the scanning laser beam on a prescan screen displaying the prescan image; and a stimulation-region specifying section configured to specify at least one scanning region to be irradiated with the stimulation laser beam on a prescan screen. When scanning region is specified by the scanning-region specifying section, the display unit displays the scanning region on the prescan screen and displays the scanning order close to the displayed scanning region. When stimulation region is specified by the stimulation-region specifying section, the display unit displays the stimulation region on the prescan screen and displays the stimulating order close to the displayed stimulation region.

The scanning laser microscope system may include a first detection unit configured to detect fluorescence generated at the specimen by the stimulation laser beam.

The scanning laser microscope system may include a second detection unit configured to detect a minute electrical current generated at the specimen by the stimulation laser beam.

The present invention is advantageous in that the flexibility in examination can be improved.

### BRIEF DESCRIPTION OF THE SEVERAL VIEWS OF THE DRAWINGS

Fig. 1 is a block diagram illustrating the overall structure of a laser-scanning microscope system according to an embodiment of the present invention.

Fig. 2 illustrates an example of a condition-setting screen.

Fig. 3 illustrates an example of the content displayed on the condition-setting screen shown in Fig. 2 when a scanning region is set.

Fig. 4 illustrates an example of the content displayed on the condition-setting screen shown in Fig. 3 when a stimulation region is set.

Fig. 5 illustrates an example of the content displayed on the condition-setting screen when a line-shaped scanning region and spot-shaped stimulation regions are set.

Fig. 6 illustrates an example of the content displayed on the condition-setting screen shown when a two-dimensional scanning region and spot-shaped stimulation regions are set.

### DETAILED DESCRIPTION OF THE INVENTION

An embodiment of the present invention will be described below with reference to the drawings.

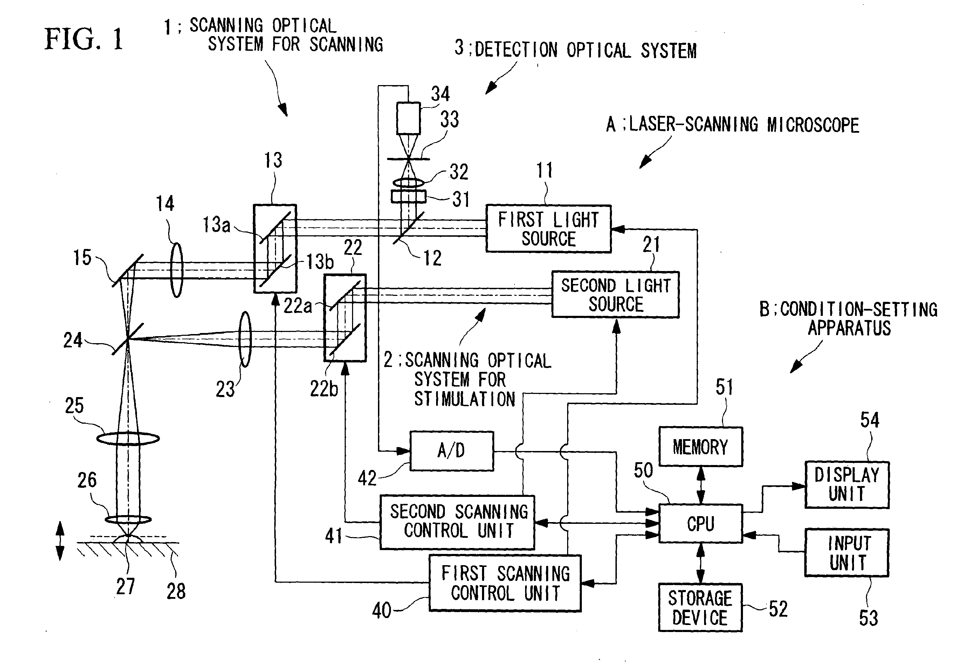

Fig. 1 is a block diagram illustrating the overall structure of a laser-scanning microscope system according to an embodiment of the present invention.

The laser-scanning microscope system according to this embodiment includes a laser-scanning microscope A and a condition-setting apparatus B.

The laser-scanning microscope A includes a scanning optical system 1 for scanning, which is configured to two-dimensionally scan a focal plane of a specimen 27 with a scanning laser beam and obtain an image; a scanning optical system 2 for stimulation, which is configured to irradiate a stimulation laser beam on the specimen 27 so as to stimulate the specimen 27; and a detection optical system 3 configured to detect reflected light and fluorescence from the specimen 27.

The scanning optical system 1 for scanning includes a first light source 11, a dichroic mirror 12, a first scanning optical unit 13, a relay lens 14, and a mirror 15. The first scanning optical unit 13 is, for example, a proximity galvanometer mirror including two opposing galvanometer mirrors 13a and 13b that can oscillate about mutually orthogonal axes.

The scanning optical system 2 for stimulation includes a second light source 21, a second scanning optical unit 22, a relay lens 23, and a dichroic mirror 24. The second scanning optical unit 22 is, for example, a proximity galvanometer mirror including two opposing galvanometer mirrors 22a and 22b that can oscillate about mutually orthogonal axes. The dichroic mirror 24 transmits light having a wavelength greater than the wavelength of the laser beam from the scanning optical system 1 and reflects the wavelength of the laser beam from the scanning optical system 2.

The detection optical system 3 is disposed at a branching point of the optical path of the dichroic mirror 12 of the scanning optical system 1. The detection optical system 3 includes a photometric filter 31, a lens 32, a confocal pinhole 33, and a photoelectric converting element 34.

The optical axis of the scanning optical system 1 and the optical axis of the scanning optical system 2 are combined at the dichroic mirror 24 and lead towards an imaging lens 25 and an objective lens 26. The focal positions of the relay lenses 14 and 23 are coincident with the focal position of the imaging lens 25. The specimen 27 is disposed on a movable stage 28 that can be raised and lowered.

The first light source 11 and the first scanning optical unit 13 are connected to a first scanning control unit 40 and are controlled on the basis of control signals from the first scanning control unit 40.

The second light source 21 and the second scanning optical unit 22 are connected to a second scanning control unit 41 and are controlled on the basis of control signals from the second scanning control unit 41. The photoelectric converting element 34 is connected to an A/D converter 42.

The first scanning control unit 40, the second scanning control unit 41, and the A/D converter 42 are connected to the condition-setting apparatus B.

The condition-setting apparatus B includes a computer system. The computer system includes, for example, a CPU 50, a memory 51, such as a RAM, a storage device 52, such as a hard disk (HD) or a read only memory (ROM), an input unit 53, and a display unit 54. The input unit 53 includes, for example, a keyboard and a mouse. The display unit 54 includes, for example, a liquid crystal display or a CRT monitor.

The storage device 52 in the condition-setting apparatus B stores various control application programs. The CPU 50 reads out a control application program from the storage device 52 to the memory 51 and executes the readout program to carry out a condition-setting process, as described below. The CPU 50 also outputs various control signals to the first scanning control unit 40 and the second scanning control unit 41 on the basis of the various conditions set in the condition-setting process.

Accordingly, the first scanning control unit 40 and the second scanning control unit 41 control the intensities and the irradiation timings of the laser beams emitted from the first light source 11 and the second light source 12, respectively, and the scanning operations of the first scanning optical unit 13 and the second scanning optical unit 22, respectively, on the basis of the control signals. In this way, desired light can be emitted at a desired irradiation region.

Furthermore, the condition-setting apparatus B forms an image based on the digital data sent from the A/D converter 42 and displays the image data on the display unit 54. In this way, the condition of a specimen can be shown as an image visible to the user.

Next, the condition-setting process carried out by the condition-setting apparatus B included in the microscope system having the above-described structure will be described.

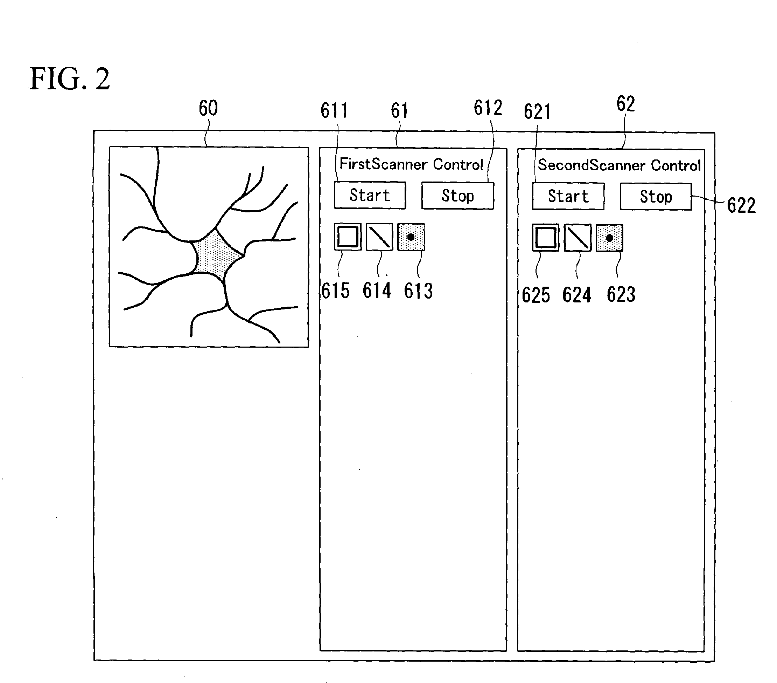

First, when a signal instructing the start of condition setting is input to the CPU 50 from the input unit 53, the CPU 50 displays a condition-setting screen, such as that shown in Fig. 2.

The condition-setting screen is provided with a prescan image displaying section 60 configured to display a prescan image of a specimen obtained by carrying out prescanning, as described below, a scanning-region specifying section 61 configured to specify at least one scanning region as an irradiation region to be irradiated with the scanning laser beam, and a stimulation-region specifying section 62 configured to specify at least one stimulation region to be irradiated with the stimulation laser beam.

The scanning-region specifying section 61 is provided with a start button 611 for instructing the start of scanning, a stop button 612 for instructing the end of scanning, and various buttons for setting the shape of the scanning region to be specified. Here, as examples, a spot scanning button 613 for scanning spots, a line scanning button 614 for scanning lines, and a two-dimensional region button 615 for scanning a two-dimensional region of a predetermined area are provided.

The stimulation-region specifying section 62 is provided with a start button 621 for instructing the start of optical stimulation, a stop button 622 for instructing the end of optical stimulation, and various buttons for setting the shape of the stimulation region to be specified. Here, as examples, a spot scanning button 623 for optically stimulating spots, a line scanning button 624 for optically stimulating lines, and a two-dimensional region button 625 for optically stimulating a two-dimensional region of a predetermined area are provided.

The CPU 50 (refer to Fig. 1) displays the above-described condition-setting screen on the display unit 54 and, at the same time, carries out prescanning for obtaining a prescan image to be displayed on the prescan image displaying section 60 in the condition-setting screen.

Prescanning is carried out by controlling the first light source 11 and the galvanometer mirrors 13a and 13b included in the first scanning optical unit 13 with the first scanning control unit 40, as shown in Fig. 1, on the basis of prescan control signals supplied from the CPU 50.

More specifically, as shown in Fig. 1, the scanning laser beam, emitted from the first light source 11, is transmitted through the dichroic mirror 12, guided to the first scanning optical unit 13, and deflected in the horizontal direction and the vertical direction. The deflected scanning laser beam is guided to the relay lens 14, the mirror 15, the dichroic mirror 24, the imaging lens 25, and the objective lens 26, and two-dimensionally scans the sectional plane of the specimen 27. A fluorescence indicator that is excited by the wavelength of the scanning laser beam is introduced into the specimen 27 in advance. By two-dimensionally scanning the laser beam on the sectional plane of the specimen 27, the fluorescence indicator is excited and generates fluorescence. The fluorescence captured by the objective lens 26 travels in the opposite direction along the same optical path as the laser beam, is transmitted through the objective lens 26, the imaging lens 25, and the dichroic mirror 24, and is guided to the dichroic mirror 12 via the mirror 15, the relay lens 14, and the first scanning optical unit 13.

Since the dichroic mirror 12 reflects light having a wavelength greater than that of the laser beam from the first light source 11, the fluorescence is reflected at the dichroic mirror 12 and is guided to the detection optical system 3.

In the detection optical system 3, a light component of the fluorescence having a predetermined wavelength is selectively transmitted through the photometric filter 31. Then, only the light from the sectional plane is selected by the lens 32 and the confocal pinhole 33, is incident on the photoelectric converting element 34, and is converted into an electrical signal. The output signal from the photoelectric converting element 34 is guided to the A/D converter 42 and is output to the CPU 50 in the condition-setting apparatus B. The detection optical system 3 may carry out electrical current measurement (patch clamping) of the specimen (such as a living cell) as a method for measuring the response of the specimen to a stimulus (second detection unit). In such a case, electrodes for patch clamping are placed on the specimen, and a minute electrical current from the electrodes is amplified at an amplifier and input to the A/D converter 42.

The CPU 50 generates image data on the basis of a digital signal from the A/D converter 42 and displays the image data on the display unit 54. In this way, a fluorescence image (two-dimensional distribution of the fluorescence irradiance) is displayed as a prescan image on the prescan image displaying section 60 on the condition-setting screen displayed on the display unit 54. When electrical current measurement is carried out by patch clamping, a specimen image representing the magnitude of the electrical current as the brightness and darkness of the image is displayed on the basis of the output signal from the A/D converter 42.

Next, the process of setting a scanning region to be irradiated with the scanning laser beam is incident on the condition-setting screen shown in Fig. 2 will be described.

First, a desired shape of the scanning region is selected by the user. The shape of the scanning region may be selected among a spot, a line, or a two-dimensional region. For example, to scan any plurality of selected spots on the specimen, the user operates the mouse of the input unit 53 (refer to Fig. 1) to select the spot scanning button 613 in the scanning-region specifying section 61. Then, the positions corresponding to the spots to be scanned are clicked in order on a prescan image displayed in the prescan image displaying section 60 to specify the spot positions. In this way, scanning regions are displayed at the specified spot positions. The scanning order of the scanning regions is displayed close to the scanning regions. According to this embodiment, the specified order matches the scanning order. Therefore, the specified order is displayed close to the scanning regions.

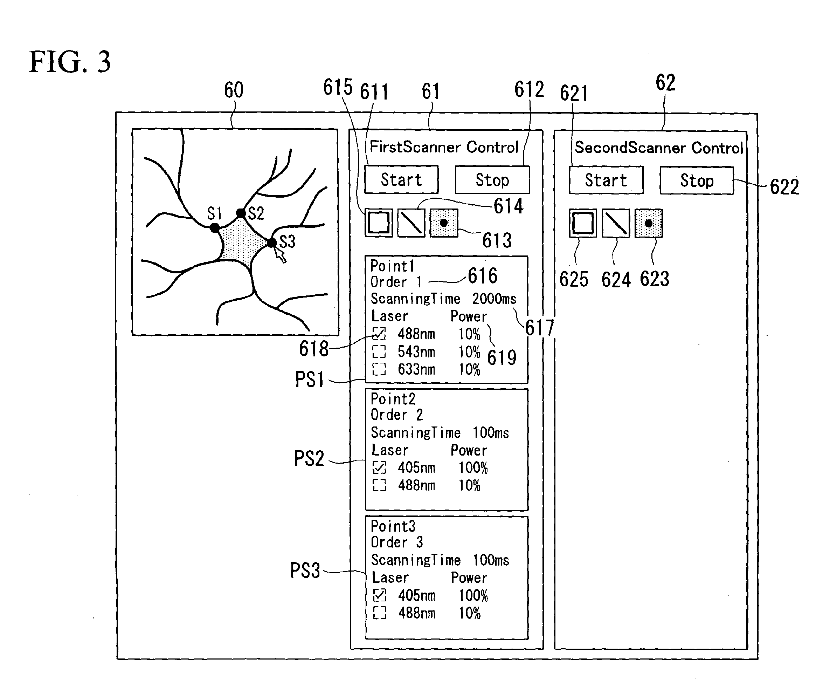

As a result, as shown in Fig. 3, the specified scanning regions may be displayed as black spots on the prescan image in the prescan image displaying section 60, and the specified order is represented as "S1", "S2", and "S3" close to the black spots. Here, "S" indicates that the black spots are scanning regions, the numbers "1", "2", and "3" represent the scanning order. In this way, the user can easily confirm the scanning order of a particular scanning region.

When scanning regions are specified, in this way, detailed setting panels corresponding to the specified scanning regions are displayed. In the example shown in Fig. 3, three scanning regions are specified. Therefore, three detailed setting panels PS1, PS2, and PS3 corresponding to the scanning regions are displayed.

In each of the detailed setting panels PS1, PS2, and PS3, settings, i.e., "scanning order 616", "irradiation time of scanning laser beam 617", "wavelength of scanning laser beam 618", and "intensity of scanning laser beam 619", are displayed. The order displayed in the prescan image displaying section 60 is set as a default value of the "scanning order 616" in each of the detailed setting panels PS1, PS2, and PS3.

The user sets the irradiation time, the wavelength, and the intensity of the scanning laser beam for each scanning region by inputting or selecting predetermined values for the settings in each of the detailed setting panels PS1, PS2, and PS3.

When the user wants to change the scanning order, the user changes the "scanning order 616" displayed in each of the detailed setting panels PS1, PS2, and PS3. For example, when user wants to change the scanning order of the scanning region S1 corresponding to the detailed setting panel PS1 such that the scanning region S1 is scanned second and wants to change the scanning order of the scanning region S2 corresponding to the detailed setting panel PS2 such that the scanning region S2 is scanned first, the "scanning order 616" of the detailed setting panel PS1 is changed from "1" to "2" by operating the keyboard of the input unit 53 (refer to Fig. 1) and, similarly, the detailed setting panel PS2 is changed from "2" to "1". In this way, the scanning order can be changed. When the scanning order is changed by the user, the CPU 50 (refer to Fig. 1) swaps the display positions of the detailed setting panels PS1 and PS2.

Furthermore, the order displayed in the prescan image displaying section 60 is changed on the basis of the changes made above. In this way, "S1" is changed to "S2" and "S2" is changed to "S1" in the prescan image displaying section 60. Accordingly, the user is capable of specifying predetermined scanning regions and the scanning order.

The user also carries out the same method for setting the conditions of the stimulation laser beam. To specify stimulation regions, similarly to the case of the scanning regions, one of a spot, a line, and a two-dimensional region can be selected.

For example, to optically stimulate any plurality of selected spots on a specimen, the spot scanning button 623 provided in the stimulation-region specifying section 62 is selected, the positions of the spots to be stimulated are clicked in order on the prescan image displayed on the prescan image displaying section 60, and the spot positions are specified. In this way, stimulation regions are displayed at the specified spot positions on the prescan image. The stimulation order is displayed close to the stimulation regions. According to this embodiment, the specified order matches the stimulation order. Therefore, the specified order is displayed close to the stimulation regions.

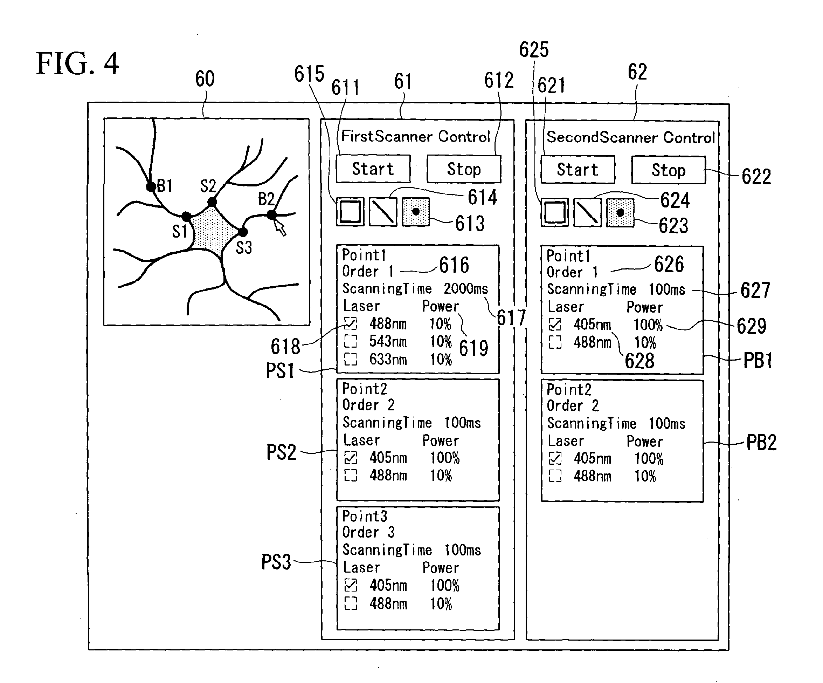

As a result, as shown in Fig. 4, the specified stimulation regions are displayed as black spots, and the specified order is represented as "B1" and "B2" close to the black spots. Here, "B" indicates that the black spots are stimulation regions, and the numbers 1 and 2 represent the stimulation order.

In this way, when stimulation regions are specified, detailed setting panels corresponding to the specified stimulation regions are displayed. In the example shown in Fig. 4, two stimulation regions are specified. Therefore, two detailed setting panels PB1 and PB2 corresponding to the stimulation regions are displayed.

Similar to the above-described detailed setting panels PS1 to PS3 for scanning, in each of the detailed setting panels PB1 and PB2, settings, i.e., "stimulation order 621", " irradiation time of stimulation laser beam 622", "wavelength of stimulation laser beam 623", and "intensity of stimulation laser beam 624", are displayed. The order displayed in the prescan image displaying section 60 is set as a default value of the "stimulation order 621" in each of the detailed setting panels PB1 and PB2.

The user sets the irradiation time, the wavelength, and the intensity of the stimulation laser beam for each stimulation region by inputting or selecting desired values for the settings in each of the detailed setting panels PB1 and PB2. To change the stimulation order, the same operation used for changing the scanning order may be carried out.

When position setting and detailed setting of the scanning regions and stimulation regions are completed, as described above, the start button 611 provided in the scanning-region specifying section 61 is pressed.

In this way, the CPU 50 (refer to Fig. 1) is notified that the start button 611 has been pressed. The CPU 50 generates control signals for the scanning optical system 1, shown in Fig. 1, on the basis of various conditions, such as the shape and positions of the scanning regions and the irradiation time, wavelength, and intensity of the laser beam irradiated on each of the scanning regions, which are set on the condition-setting screen shown in Fig. 4. The generated control signals are output to the first scanning control unit 40, shown in Fig. 1, and scanning is carried out on the basis of the conditions set by the user. In this way, reflected light or fluorescence from each scanning region specified on the specimen is detected by the detection optical system 3 through the scanning optical system 1, sent through the A/D converter 42 and the CPU 50, and displayed on the display unit 54 as fluoroscopy results. A window for displaying the fluoroscopy results is provided separately from the above-described condition-setting screen.

When the start button 621 provided in the stimulation-region specifying section 62 on the condition-setting screen shown in Fig. 4 is pressed by the user while fluoroscopy is being carried out, as described above, the CPU 50 generates control signals for the scanning optical system 2 on the basis of the various conditions set on the condition-setting screen shown in Fig. 4. The generated control signals are output to the second scanning control unit 41.

In this way, stimulation laser beams having a set wavelength and a set intensity are emitted from the second light source 21 and are incident on the stimulation regions on the specimen in order. More specifically, as shown in Fig. 1, the stimulation laser beams from the second light source 21 are guided to the dichroic mirror 24 via the second scanning optical unit 22 and the relay lens 23 and, then, at the dichroic mirror 24, are combined with the optical axis of the laser beams from the scanning optical system 1 for scanning. Then, the laser beams are transmitted through the imaging lens 25 and the objective lens 26 and are incident on the sectional plane of the specimen 27 in order.

To stop the optical stimulation, the user presses the stop button 622 on the condition-setting screen. In this way, a signal for stopping the optical stimulation is output from the CPU 50, shown in Fig. 1, to the second scanning control unit 41, and the optical stimulation is stopped. Similarly, to stop the scanning, the stop button 612 on the condition-setting screen is pressed.

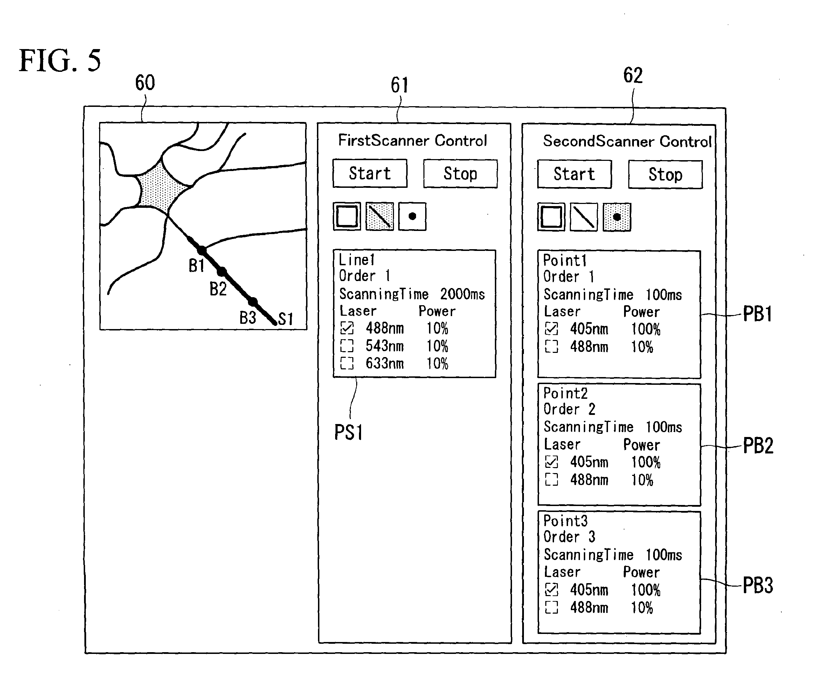

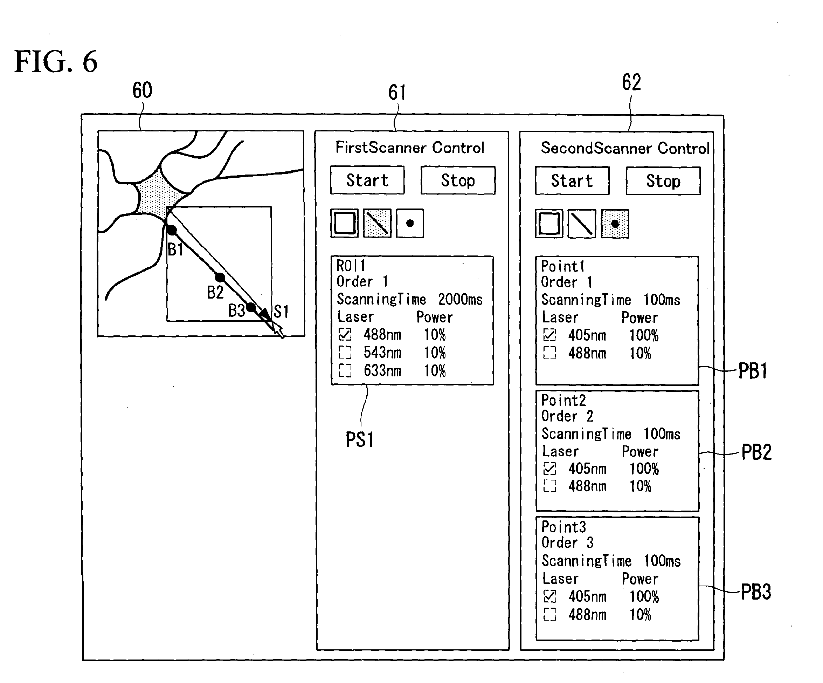

In the above-described embodiment, the shape of the scanning region is a spot. However, by selecting the line-scanning button 614 or the two-dimensional region button 615 provided in the scanning-region specifying section 61, a line-shaped scanning region, as shown in Fig. 5, or a two-dimensional scanning region may be set, as shown in Fig 6. The shapes of the scanning regions may be combined. More specifically, a spot may be selected as a first scanning region, a line as a second scanning region, and a two-dimensional area may be selected as a third scanning region. The number of scanning regions to be set may be freely selected by the user. For example, two spot-scanning regions, two line-scanning regions, and two two-dimensional scanning regions may be set.

Similarly, for the stimulation region, by selecting the line scanning button 624 or the two-dimensional region button 625, a line-shaped stimulation region or a two-dimensional stimulation region may be set. Moreover, conditions may be set so that stimulation regions of both shapes are set.

As described above, according to the laser-scanning microscope system of this embodiment, the shape of the scanning regions and the stimulation regions may be freely selected by the user among spots, lines, and two-dimensional areas, and the number of regions to be set may be freely selected by the user. Therefore, the flexibility of specimen examination is increased, and any desired examination may thus be carried out.

Since scanning and stimulation orders are displayed close to the scanning regions and the stimulation regions, respectively, on the condition-setting screen, the user can easily confirm the scanning and stimulation orders. Since the orders are changeable, the condition setting operation is made easier.

An embodiment of the present invention has been described above with reference to the drawings. However, the detailed structure of the embodiment is not limited thereto, and the embodiment may include modifications within the scope of the present invention.

For example, according to the above-described embodiment, three shapes, i.e., spots, lines, and two-dimensional areas, are provided as the shapes of the regions. However, the shape of the regions is not limited thereto. Instead, for example, a region-setting button that allows the user to freely draw the shape of a region may be provided.

According to the above-described embodiment, the default orders of carrying out scanning and optical stimulation are the orders specified by the user. However, the orders are not limited, and the CPU 50 may automatically determine the orders of scanning and optical stimulation that are suitable for examination, and the automatically determined orders may be displayed on the condition-setting screen as the default orders.

## Claims

1. A condition-setting apparatus configured to set laser irradiation conditions suitable for examination and included in a laser-scanning microscope having a scanning optical system for scanning, which is configured to irradiate a scanning laser beam on a specimen so as to obtain an image of the specimen, and a scanning optical system for stimulation, which is configured to irradiate a stimulation laser beam on the specimen so as to stimulate the specimen, the condition-setting apparatus comprising:
a display unit configured to display a prescan image; and
a region-specifying section configured to specify at least one region to be irradiated with at least one of the scanning laser beam and the stimulation laser beam on a prescan image screen displaying the prescan image,
wherein, when at least one region is specified by the region-specifying section, the display unit displays the specified region and the order of laser beam irradiation on the prescan image screen.

2. The condition-setting apparatus according to Claim 1,
wherein the region-specifying section includes a stimulation-region specifying section configured to specify at least one stimulation region to be irradiated with the stimulation laser beam on the prescan screen, and
wherein, when the stimulation region is specified by the stimulation-region specifying section, the display unit displays the stimulation region and the stimulation order on the prescan image screen.

3. The condition-setting apparatus according to Claim 1,
wherein the region-specifying section includes a scanning-region specifying section configured to specify at least one scanning region to be irradiated with the scanning laser beam on the prescan screen, and
wherein, when the scanning region is specified by the scanning-specifying section, the display unit displays the scanning region and the scanning order on the prescan image screen.

4. The condition-setting apparatus according to Claim 1, further comprising:
an irradiation-order changing unit configured to change the irradiation order of the at least one region to be irradiated with at least one of the scanning laser beam and the stimulation laser beam.

5. The condition-setting apparatus according to Claim 1, wherein the shape of the region is one of a spot, a line, and a two-dimensional area.

6. A scanning laser microscope system comprising:
a scanning laser microscope; and
a condition-setting apparatus configured to set laser irradiation conditions suitable for examination with the scanning laser microscope,
wherein the scanning laser microscope includes
a scanning optical system for imaging, which is configured to irradiate a scanning laser beam on a specimen so as to obtain an image of the specimen, and
a scanning optical system for stimulation, which is configured to irradiate a stimulation laser beam on the specimen so as to stimulate the specimen,
wherein the condition-setting apparatus includes
a display unit configured to display a prescan image,
a scanning-region specifying section configured to specify at least one scanning region to be irradiated with the scanning laser beam on a prescan screen displaying the prescan image, and
a stimulation-region specifying section configured to specify at least one stimulation region to be irradiated with the stimulation laser beam on the prescan screen,
wherein, when scanning region is specified by the scanning-region specifying section, the display unit displays the scanning region on the prescan screen and displays the scanning order close to the displayed scanning region, and
wherein, when stimulation region is specified by the stimulation-region specifying section, the display unit displays the stimulation region on the prescan screen and displays the stimulating order close to the displayed stimulation region.

7. The scanning laser microscope system according to Claim 6, further comprising:
a first detection unit configured to detect fluorescence generated at the specimen by the stimulation laser beam.

8. The scanning laser microscope system according to Claim 6, further comprising:
a second detection unit configured to detect a minute electrical current generated at the specimen by the stimulation laser beam.
